Europäisches Patentamt

European Patent Office

Office européen des brevets

(19)

(11) **EP 1 508 820 A1**

(12) **EUROPEAN PATENT APPLICATION**

(43) Date of publication:
**23.02.2005 Bulletin 2005/08**

(51) Int Cl.[7]: **G02B 3/02**

(21) Application number: **04254999.8**

(22) Date of filing: **19.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **21.08.2003 JP 2003208205**

(71) Applicants:
• **Pioneer Corporation**
  **Meguro-ku, Tokyo (JP)**
• **Pioneer Display Products Corporation**
  **Fukuroi-shi, Shizuoka-ken (JP)**

(72) Inventors:
• **Hasebe, Yuichi,**
  **c/o Pioneer Display Products Corp.**
  **Nakakoma-gun Yamanashi-ken (JP)**
• **Shinokura, Kiichiro, c/o Pioneer Corporation**
  **Tokyo (JP)**

(74) Representative: **Haley, Stephen**
  **Gill Jennings & Every,**
  **Broadgate House,**
  **7 Eldon Street**
  **London EC2M 7LH (GB)**

(54) **Optics for remote control**

(57) A light signal receiving apparatus receives alight signal transmitted from a light signal transmitting apparatus (100), such as a tuner and a terminal connected to the Internet, which are disposed in a household room, and supplies video information and audio information to a video equipment such as a TV, and an audio equipment including an amplifier and a speaker. The light signal receiving apparatus includes an optical system condensing the light signal on a light-receiving element (11) with a condensing lens (10). The light-receiving element is (11) disposed nearer the condensing lens (10) in relation to a focusing point of the condensing lens, and the condensing lens (10) includes a non-spherical surface shape strongly distributing, on the light-receiving element, an intensity distribution on a light-receiving element disposed plane of an incident light obliquely incident with respect to an optical axis (52) of the condensing lens within a range of predetermined angles. Thereby, the light signal incident on the condensing lens within a large range can be received at a predetermined light receiving intensity.

FIG. 3A

EP 1 508 820 A1

FIG. 3B

**Description**

The present invention relates to a light signal receiving apparatus which receives a light signal, such as a high frequency modulated light signal.

There is known a technique of transmitting and receiving information light-modulated by an LED and other light device. There is an idea that such light signal communication is applied to a terminal, an AV apparatus and the like for household use. For example, video information and audio information can be transmitted from a tuner and a terminal connected to the Internet, which are disposed in a household room, to a video equipment such as a TV and an audio equipment including an amplifier, a speaker and the like, to be reproduced.

In a case of disposing a light transmitting apparatus and a light receiving apparatus at a corner of a room or near the video and/or audio equipment, and receiving a signal light which is modulated by the video information and the audio information, as a signal becomes higher speed, it becomes necessary to receive not a scattering light produced by a ceiling and a wall but a direct light. Thereby, a relative relation between a position of the light transmitting apparatus and a light receivable angle of the light receiving apparatus becomes subtle. Therefore, in an optical system of the light receiving apparatus, since light receiving intensity becomes different in accordance with an incident angle of the received signal light, the sufficient light receiving intensity cannot be problematically obtained at a certain incident angle.

As a method of enlarging an angle range of high light receiving efficiency for the signal light which is incident at a large incident angle, providing plural light sensors (light-receiving elements) to the optical system of the light receiving apparatus is conceivable. However, since electric capacity of all the light sensors increases if the plural light sensors are provided, a frequency characteristic is deteriorated and a high-speed transmitting performance falls off (i.e., transmitting capacity decreases). In addition, sincetheplural light sensors are disposed at different positions, adjusting a phase of a light receiving signal is necessary. There are some problems in the method of utilizing the plural light sensors, as described above.

The present invention has been achieved in order to solve the above problems. It is an object of this invention to provide a receiving apparatus of a light signal capable of efficiently receiving a signal light within a range of broader angles.

According to one aspect of the present invention, there is provided a light signal receiving apparatus which collects a light signal on a light-receiving element by a condensing lens to receive the signal, wherein the light-receiving element is disposed nearer the condensing lens in relation to a focusing point of the condensing lens, and wherein the condensing lens includes a non-spherical surface shape which strongly distributes, on the light-receiving element, an intensity distribution on a light-receiving element disposed plane of an incident light which is obliquely incident with respect to an optical axis of the condensing lens within a range of predetermined angles.

For example, the light signal receiving apparatus receives the light signal transmitted from the light signal transmitting apparatus, such as a tuner and a terminal connected to the Internet, which are disposed in a household room, and supplies video information and audio information to a video equipment, such as a TV, and an audio equipment including an amplifier, a speaker and the like. The light signal receiving apparatus includes an optical system which collects the light signal on the light-receiving element by the condensing lens. The light-receiving element is disposed nearer the condensing lens in relation to the focusing point of the condensing lens, and the condensing lens includes the non-spherical surface shape which strongly distributes, on the light-receiving element, the intensity distribution on the light-receiving element disposed plane of the incident light which is obliquely incident with respect to the optical axis of the condensing lens within the range of the predetermined angles. Thereby, the light signal which is incident on the condensing lens from a large range can be received with a predetermined light receiving intensity. It is suitable for receiving the light signal which is incident within a range of large angles including directions of a wall and a ceiling of the room by the light signal receiving apparatus disposed at a corner of the room.

The above-mentioned condensing lens is realized, if the condensing lens has a non-spherical surface which is defined by positioning two curves, which are obtained by even-number order correction of arcs, such that vertexes of the two curves coincide with each other and the two curves cross each other, and by moving one of the two curves in parallel along the other of the two curves. The two curves are defined as curves in X and Y directions respectively, when it is prescribed that a radial direction of the condensing lens is an X axis direction, another radial direction vertical to the radial direction is a Y axis direction, and an optical axis direction of the condensing lens is a Z axis direction.

In addition, the above-mentioned light signal receiving apparatus may further include another condensing lens which is disposed between the condensing lens and the light-receiving element, and which enlarges a light receiving angle range of the light signal by the light-receiving element. Including another condensing lens can further enlarge the light receiving angle range of the light signal.

The nature, utility, and further features of this invention will be more clearly apparent from the following detailed description with respect to preferred embodiment of the invention when read in conjunction with the accompanying drawings briefly described below.

In the Drawings;

FIGS. 1A and 1B show a configuration example of an optical system of a light signal receiving apparatus using a spherical surface lens.

FIGS. 2A and 2B show an example of an intensity distribution (incident angle vs. light receiving intensity) with respect to a light receiving angle by an optical system of a light signal receiving apparatus using a spherical surface lens.

FIGS. 3A and 3B show a configuration of an optical system of a light signal receiving apparatus with a condensing lens of the present invention.

FIGS. 4A to 4C show examples of incident angle dependency of a light receiving intensity distribution (a shift quantity from an optical axis vs. light receiving intensity, a parameter is an incident angle) by an optical system of a light signal receiving apparatus using a spherical surface lens.

FIGS. 5A to 5C show examples of incident angle dependency of a light receiving intensity distribution (a shift quantity from an optical axis vs. light receiving intensity, a parameter is an incident angle) by an optical system of a light signal receiving apparatus using a condensing lens of the present invention.

FIGS. 6A and 6B show an example of an intensity distribution (an incident angle vs. light receiving intensity) with respect to a light receiving angle by an optical system of a light signal receiving apparatus with a condensing lens of the present invention.

FIGS. 7A to 7E are diagrams explaining a method of producing a condensing lens of the present invention.

FIG. 8 shows an example of a condensing lens of the present invention.

FIG. 9 shows an example of incident angle dependency of a light receiving intensity distribution (a shift quantity from an optical axis vs. light receiving intensity, a parameter is an incident angle) of a condensing lens shown in FIG. 8.

FIG. 10 shows another example of an optical system of a light signal receiving apparatus using a condensing lens of the present invention.

FIGS. 11A and 11B show a basic configuration of an optical communication system utilizing the light signal receiving apparatus of the present invention, and configurations of a transmitting apparatus and a receiving apparatus thereof.

FIGS. 12A and 12B show configurations of a modulating unit and a demodulating unit shown in FIG. 11B.

FIGS. 13A and 13B show configurations of a light transmitting unit and a light receiving unit shown in FIG. 11B.

The preferred embodiments of the present invention will now be described below with reference to the attached drawings.

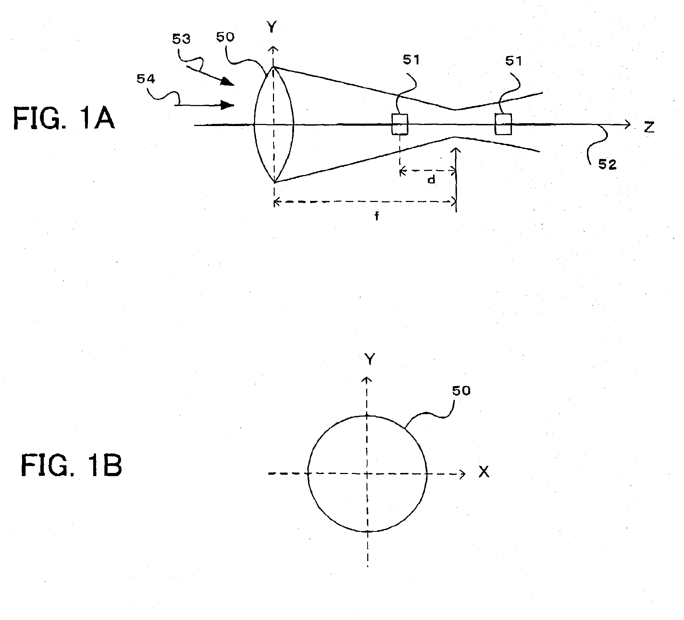

First, the description will be given of a light receiving intensity distribution in a case of utilizing a spherical surface lens in an optical system of a receiving apparatus. FIG. 1A shows an example of the optical system utilizing the spherical surface lens. In FIG. 1A, a focal distance of a spherical surface lens 50 is "f", and a light-receiving element 51, such as a light sensor, is disposed at a position which is shifted forward or backward by a predetermined distance "d" from a focal point on an optical axis 52 of the spherical surface lens 50. In the optical system, it is prescribed that an X axis is in a direction vertical to a drawing sheet, a Y axis is in a vertical direction of FIGS. 1A and 1B, and a Z axis is in a direction of the optical axis 52 of the spherical surface lens 50, as shown in FIGS. 1A and 1B.

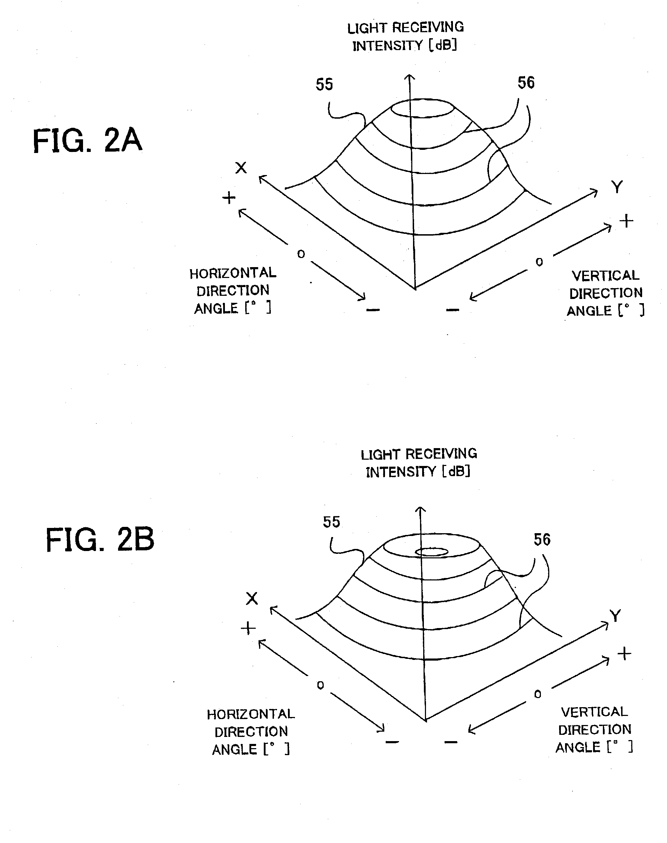

FIGS. 2A and 2B schematically show a light receiving intensity characteristic (a three-dimensional characteristic) 55 of the incident light which is incident on the light-receiving element 51 disposed at the position shown in FIG. 1A by contour maps. The light receiving intensity characteristic 55 is indicated by plural contours 56 each corresponding to a predetermined light receiving intensity. In FIGS. 2A and 2B, numerical values on X and Y axes indicate angles of the incident lights with respect to the optical axis 52 in the directions of the X and Y axes shown in FIGS. 1A and 1B, respectively. Namely, the light receiving intensity at a point at which both a horizontal direction angle and a vertical direction angle are zero indicates the light receiving intensity of a light incident in parallel with the optical axis 52 of the spherical surface lens 50 shown in FIGS. 1A and 1B.

In the example in FIG. 2A, the light receiving intensity of the incident light parallel to the optical axis 52 is the largest. As the incident angle with respect to the optical axis 52 becomes larger in the directions of the X and Y axes, the light receiving intensity drastically decreases. Namely, as the incident light has a smaller incident angle with respect to the optical axis 52 (e.g., the incident light 54 in FIG. 1A), the light receiving intensity by the light-receiving element 51 becomes larger, and as the incident light has a larger incident angle with respect to the optical axis 52 (e.g., the incident light 53 in FIG. 1A), the light receiving intensity by the light-receiving element 51 becomes smaller.

In the example in FIG. 2B, a peak of the light receiving intensity is at a predetermined incident angle. Namely, though the light receiving intensity maintains increasing from the incident light parallel to the optical axis to the incident light of the predetermined incident angle in the directions of the X and Y axes, the light receiving intensity decreases when the incident angle exceeds the predetermined incident angle, identically to the example in FIG. 2A.

In the example in FIG. 2A, as the incident angle of the incident light with respect to the optical axis 52 becomes larger, the light receiving intensity decreases. In the example in FIG. 2B, though the light receiving intensity comparatively maintains a flat characteristic from the incident angle of "0" (i.e., parallel to the optical axis 52) to the predetermined incident angle corresponding to the peak of the light receiving intensity, the light receiving intensity decreases when the incident angle exceeds the predetermined incident angle. Namely, when the incident angle with respect to the optical axis 52 is larger than the predetermined incident angle, the light receiving intensity drastically decreases.

In addition, the contours of a light receiving intensity distribution characteristic are almost circular in the examples in FIGS. 1A and 1B. As described above, when the light receiving apparatus is disposed at the corner of the room, the distribution of the incident angle of the signal light incident on the optical system of the light receiving apparatus, i.e., a direction of a light source on a side of a light transmission apparatus is rather rectangular than circular. Therefore, in the optical system whose incident angle dependency characteristic is circular, receiving the sufficient signal light is difficult.

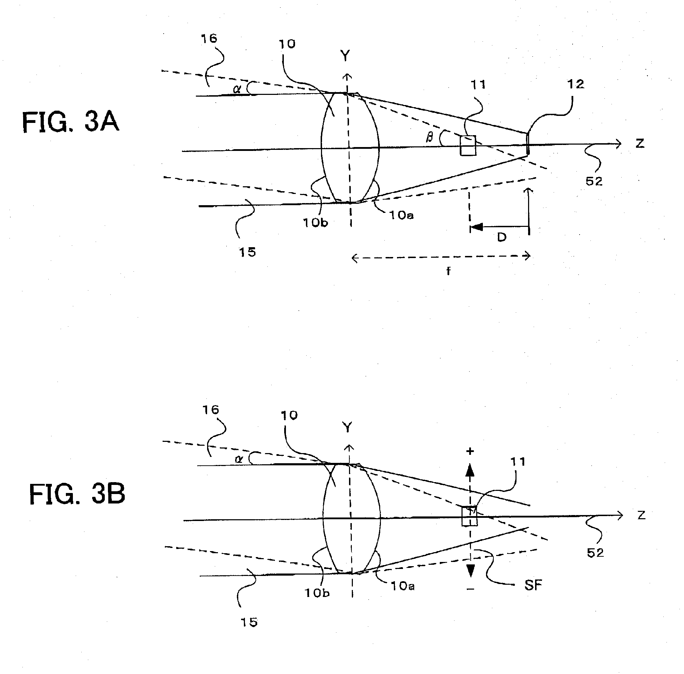

FIGS. 3A and 3B show a configuration of an optical system according to the embodiment of the present invention, in which a problem of the above-mentioned optical system is solved. The optical system shown in FIGS. 3A and 3B is applied to the above-mentioned receiving apparatus and the like, and includes a condensing lens 10 to which the present invention is applied. It is noted that X, Y and Z axes in FIG. 3A and 3B are identical to the axes prescribed in FIG. 1A and 1B.

A light-receiving element 11 is disposed at a condensing position of the condensing lens 10 on the optical axis 52, i.e., at a position shifted by a distance D on a side of the condensing lens 10 from a focal point 12, Thereby, an angle range of the incident light receivable by the light-receiving element 11 becomes large.

Both an emitting side surface 10a (on the right side of FIGS. 3A and 3B) and an incident side surface 10b of the condensing lens 10 are in a shape of non-spherical surface, and are formed so that the intensity distribution on the light-receiving element disposed plane of the incident light which is obliquely incident with respect to the optical axis 52 of the condensing lens 10 within the range of the predetermined angles is strongly distributed on the light-receiving element 11. In FIGS. 3A and 3B, a light which is incident in parallel with the optical axis 52 of the condensing lens 10 is indicated as an incident light 15, and a light which is obliquely incident with respect to the optical axis 52 by a predetermined angle $\alpha$ is indicated as an incident light 16. Like this, a shape of the condensing lens 10, i.e., shapes of both the non-spherical surfaces 10a and 10b of the condensing lens 10, is determined so that the intensity distribution on the light-receiving element disposed plane of the incident light which is obliquely incident with respect to the optical axis 52 is strongly distributed on the light-receiving element 11. It is noted that a concrete example of the shape of the condensing lens 10 will be described later.

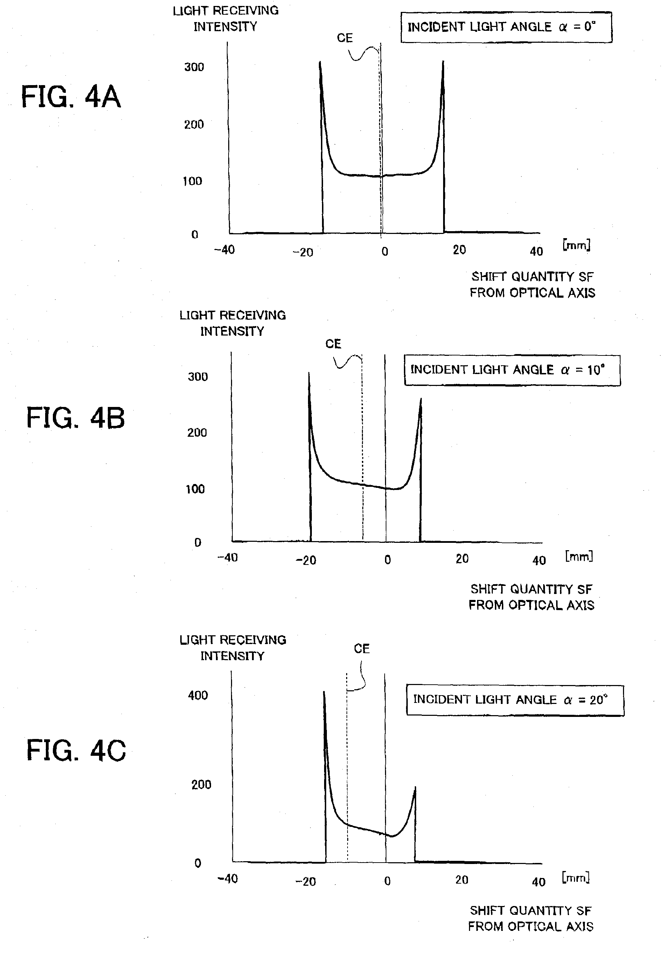

FIGS. 4A to 4C show the light receiving intensity of the light-receiving element 11 in a case that an inclination angle $\alpha$ with respect to the optical axis 52 of the incident light 16 shown in FIG. 3A is set to 0°, 10° and 20°, for the normal spherical surface lens. Namely, the light receiving intensity of the incident light on the light-receiving element 11 in a case that the normal spherical surface lens is disposed in place of the condensing lens 10 in FIG. 3A is indicated. In FIGS. 4A to 4C, horizontal axes indicate distances of shifts from the optical axis 52 to a center position of the light-receiving element 11 on the light-receiving element disposed surface (a distance SF in FIG. 3B, hereafter they are also called "shift quantities"). Namely, the graphs show the light receiving intensity in a case that the center of the light-receiving element 11, which is to be normally on the optical axis 52, is shifted by the shift quantity SF in the X or Y direction from the optical axis 52 on an X-Y surface perpendicular to the optical axis.

FIG. 4A indicates that the incident light can be received with necessary light receiving intensity even when the center of the light-receiving element 11 is shifted within a range of approximately -18mm to 18mm in the X or Y direction at a time of the incident light inclination angle $\alpha$ = 0°. The peaks of the light receiving intensity are at positions where the shift quantity SF of the light-receiving element 11 is approximately equal to -18mm and 18mm.

FIG. 4B indicates that the incident light can be received with the necessary light receiving intensity even when the center of the light-receiving element 11 is shifted within a range of approximately -20mm to 10mm in the X or Y direction at a time of the incident light inclination angle $\alpha$ = 10°. The peaks of the light receiving intensity are at positions where the shift quantity SF of the light-receiving element 11 is approximately equal to -20mm and 10mm.

FIG. 4C indicates that the incident light can be received with the necessary light receiving intensity even when the center of the light-receiving element 11 is shifted within a range of approximately -17mm to 8mm in the X or Y direction at a time of the incident light inclination angle $\alpha$ = 20°. The peaks of the light receiving intensity are at positions where the shift quantity SF of the light-receiving element 11 is approximately equal to -17mm and 8mm. However, the light receiving intensity at the peak around the shift quantity SF = 8mm is much smaller than the light receiving intensity at the peak around the shift quantity SF = -17mm.

In FIGS. 4A to 4C, a position at which the light-receiving element 11 can sufficiently receive the incident light (hereafter, it is called "optimum light receiving position", and it is indicated by a reference numeral "CE") is indicated by a position which almost equally divides an area of each characteristic. In FIG. 4A, since the characteristic is symmetrical with respect to the position of the shift quantity SF = 0mm, the optimum light receiving position CE is at the position of the shift quantity = 0mm, i.e., on the optical axis 52. On the other hand, the optimum light receiving position CE is around the position where the shift quantity SF is appropriately -5mm in FIG. 4B, and the optimum light receiving position CE is around the position where the shift quantity SF is appropriately -8mm in FIG. 4C. Like this, in a case of utilizing the spherical surface lens, if the inclination angle $\alpha$ of the incident light on the spherical surface lens varies from 0° to 20°, the optimum light receiving position CE on the X-Y surface at which the light-receiving element 11 is disposed (i. e. "light-receiving element disposed plane") also varies in a negative (-) direction from the optical axis, i.e. , in a direction opposite to the inclination angle $\alpha$, like the shift quantity SF=-5mm and -8mm. However, in the actual receiving apparatus, the light-receiving element 11 is disposed on the optical axis 52, i. e., at the position of the shift quantity SF = 0. Therefore, as the inclination angle $\alpha$ of the incident light on the spherical surface lens becomes larger, the light receiving intensity by the light-receiving element 11 becomes smaller. Namely, as the light is incident on the spherical surface lens at the larger inclination angle from outside, it becomes more difficult for the light-receiving element 11 to receive the light.

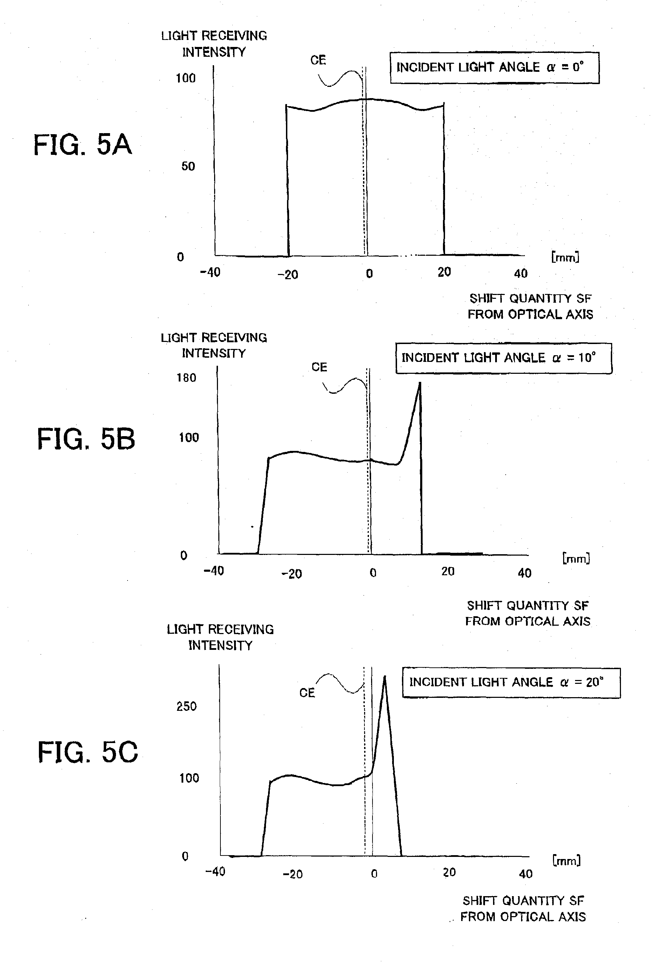

Next, FIGS. 5A to 5C show the identical characteristic in a case of utilizing the condensing lens 10 according to the present invention. FIGS. 5A to 5C show the light receiving intensity on the light-receiving element 11 in a case that the inclination angle $\alpha$ with respect to the optical axis 52 of the incident light 16 shown in FIG. 3A is set to 0° , 10° and 20°, for the condensing lens 10. Identically to FIGS. 4A to 4C, the horizontal axes in FIGS. 5A to 5C indicate the shift quantity SF from the optical axis 52 of the light-receiving element 11 on the plane where the light-receiving element 11 is disposed.

FIG. 5A indicates that the incident light can be received with the necessary light receiving intensity even when the center of the light-receiving element 11 is shifted within the range of appropriately -20mm to 20mm in the X or Y direction at the time of the incident light inclination angle $\alpha = 0°$. The light receiving intensity is almost constant within the range where the shift quantity SF of the light-receiving element 11 is approximately -20mm to 20mm. Therefore, the optimum light receiving position CE is around the shift quantity SF = 0, i.e., on the optical axis 52.

FIG. 5B indicates that the incident light can be received with the necessary light receiving intensity even when the center of the light-receiving element 11 is shifted within a range of approximately -25mm to 15mm in the X or Y direction at the time of the incident light inclination angle $\alpha = 10°$. The large peak of the light receiving intensity does not exist on the side of the shift quantity SF of the light-receiving element 11 = -25mm, and the large peak of the light receiving intensity exists around the shift quantity SF = 15mm. Therefore, the optimum light receiving position CE is maintained around the shift quantity SF = 0, i.e., on the optical axis 52.

FIG. 5C indicates that the incident light can be received with the necessary light receiving intensity even when the center of the light-receiving element 11 is shifted within the range of approximately -25mm to 8mm in the X or Y direction at the time of the incident light inclination angle $\alpha = 20°$. The large peak of the light receiving intensity does not exist on the side of the shift quantity SF of the light-receiving element 11 = -25mm, and the large peak of the light receiving intensity is around the shift quantity SF = 8mm. Therefore, the optimum light receiving position CE is maintained around the shift quantity SF = 0, i.e., on the optical axis 52.

As described above, by using the condensing lens 10 in the non-spherical surface type of the present invention and by disposing the light-receiving element 11 nearer the condensing lens 10 in relation to the focusing point of the condensing lens 10, the optimum light receiving position CE of the incident light, i.e., the position at which the incident light can be received with the necessary light receiving intensity, can be maintained around the shift quantity SF = 0, i.e., on the optical axis 52, even if the incident light inclination angle $\alpha$ varies. Therefore, the incident light which is incident on the condensing receiving lens 10 at the large angle can be received with the sufficient intensity.

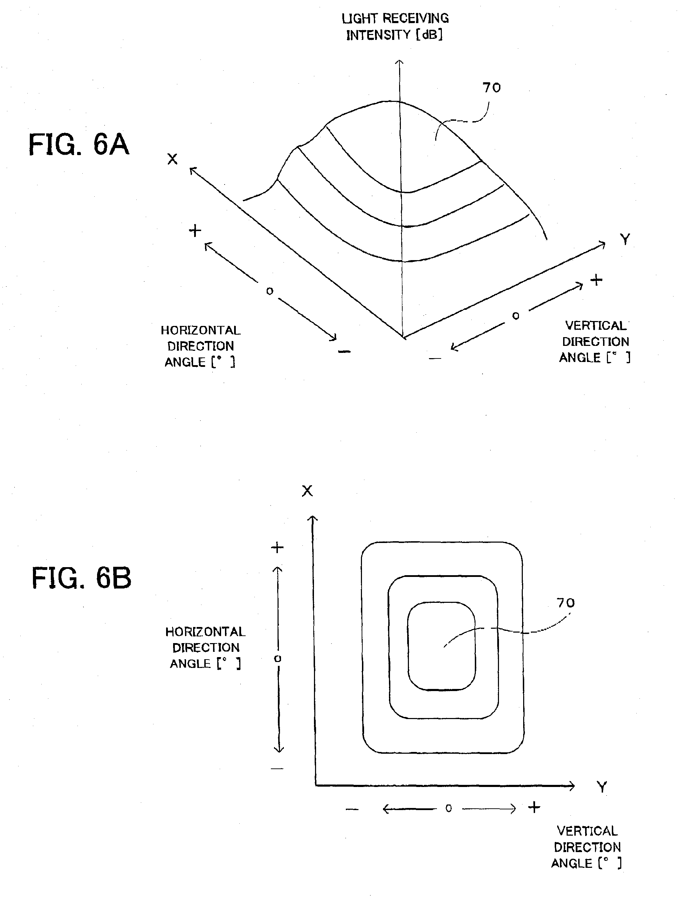

FIG. 6A shows the light receiving intensity distribution on the light-receiving element 11 of the incident light on the condensing lens 10 by a three-dimensional contour map. It is noted that definitions of X and Y axes are identical to the definitions in FIGS. 1A and 1B. FIG. 6B is a diagram of a plain view of the contour map shown in FIG. 6A from an upper position thereof. As shown, the light receiving intensity has an area 70 in which the light receiving intensity is comparatively flat at the center of the position of the inclination angle = 0 in the directions of the X and Y axes. As understood in comparison with FIGS. 2A and 2B, it is indicated that the light receiving intensity does not largely decrease by the condensing lens 10 even when the incident angle is slightly shifted vertically and horizontally from the optical axis 52.

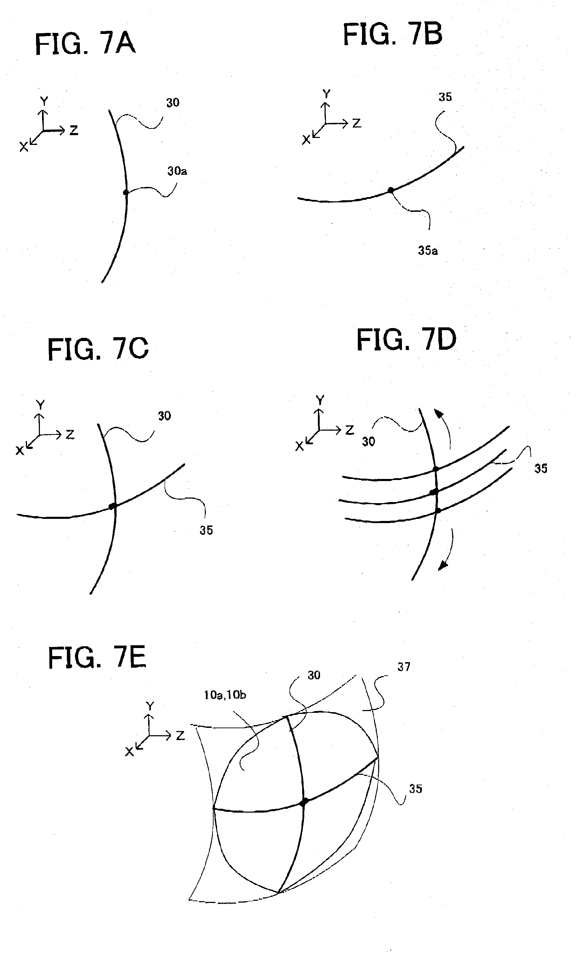

Next, a method of producing the condensing lens 10 will be explained. The condensing lens 10 can be produced on the basis of curves obtained by even-number order correction of arcs. FIGS.7A to 7E schematically show the method of producing the condensing lens 10. It is defined that X, Y and Z axes in FIGS. 7A to 7E are the directions identical to those shown in FIGS. 3A and 3B.

First, as shown in FIG. 7A, a curve 30 of a predetermined length in the direction of the Y axis is defined. The curve is defined by the even-number order (two order, four order, six order, or else) correction of the arc. The curve 30 has a vertex 30a. Next, as shown in FIG. 7B, a curve 35 which extends in the direction of the X axis and which has the shape identical to the curve 30, is defined. The curve 35 has a vertex 35a corresponding to the vertex 30a of the curve 30.

Next, as shown in FIG. 7C, the curve 30 and a curve 35 are made to cross each other so that the two vertexes 30a and 35a coincide with each other, and as shown in FIG. 7D, the curve 35 is moved in parallel along the curve 30 in a positive and negative direction of the Y axis (i.e., in an upward-downward direction in FIG. 7D). Thereby, as shown in FIG. 7E, a non-spherical surface 37 is defined. The condensing lens 10 has the non-spherical surfaces thus produced on the incident side surface 10b and the emitting side surface 10a. The non-spherical surfaces of the incident side surface 10b and the emitting side surface 10a are formed as the non-spherical surfaces of different shapes by making the shapes of the curves 30 and 35 different.

In the above-mentioned method, the non-spherical surface is formed by moving the curve 35, which has the shape identical to the curve 30 in the direction of the Y axis, in parallel, along the Y axis. Conversely, the non-spherical surface may be formed by moving a curve, which has a shape identical to a curve in the direction of the X axis, in parallel, along the X axis.

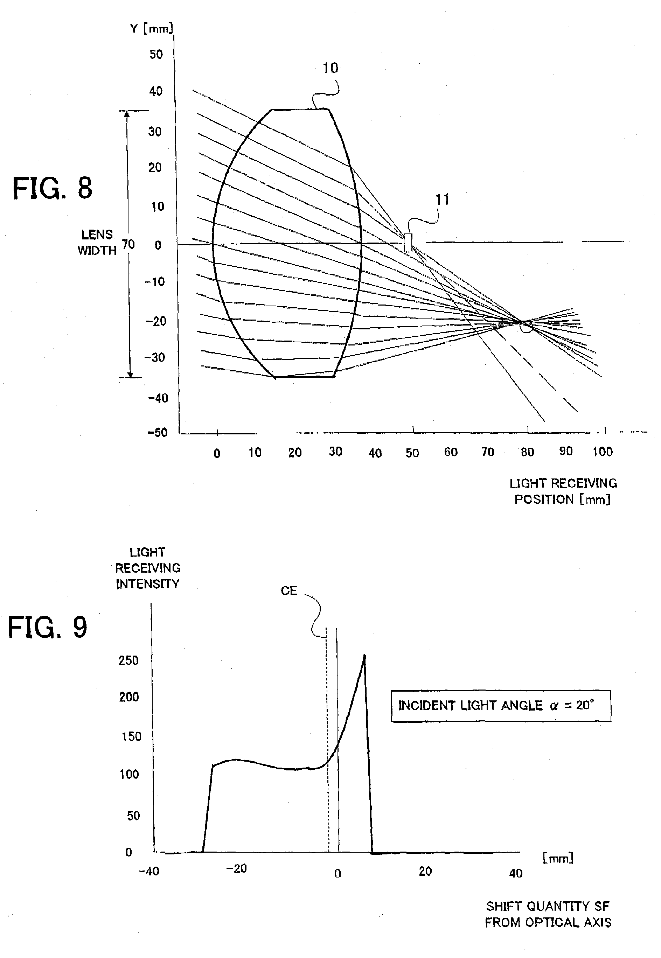

FIG. 8 shows an example of the condensing lens which is produced by the above-mentioned method. In the example, the shape of the curve 30 in the direction of the Y axis is defined by an equation (1).

$$Z = \frac{C\,Y^2}{1+\{1-(k+1)C^2Y^2\}^{1/2}} \qquad (1)$$

    * C:CURVATURE
    k: SHAPE FACTOR

Here, "C" indicates a curvature of the non-spherical surface, and "k" is a factor which defines the shape of the non-spherical surface.

A value of "Z" is a function of "$Y^2$" in the equation (1), which indicates the curve 30 obtained by two order correction of the arc. An equation of a curve obtained by four or six order correction of the arc has a term, such as "$Y^2$" and "$Y^4$", in the equation (1), and the factor "k" (k1, k2, ..) is multiplied to each term. In addition, the curve 35 in the direction of the X axis is defined by an equation (2) in relation to X, which is identical to the equation (1).

$$Z = \frac{C\,X^2}{1+\{1-(k+1)C^2X^2\}^{1/2}} \qquad (2)$$

    * C:CURVATURE
    k: SHAPE FACTOR

Respective values in the example of the condensing lens 10 shown in FIG. 8 are below, and the values are identical in the directions of the X and Y axes.

- Lens width: 70mm
- Refraction index: 1.41
- Curvature Cin of non-spherical surface on incident side: 40mm$^{-1}$
- Shape factor of non-spherical surface on incident side: -1
- Curvature Cout of non-spherical surface on emitting side: 50mm$^{-1}$
- Shape factor of non-spherical surface on emitting side: -5
- Lens thickness: 15mm
- Light receiving position: 50mm from incident side surface of lens (position of light-receiving element 11 in FIG. 8)

As for the example of the condensing lens, FIG. 9 shows the light receiving intensity of the light which is incident on the condensing lens 10 at the incident angle $\alpha = 20°$ (see FIGS. 3A and 3B), with disposing the light-receiving element 11 at the position shown in FIG. 8. Identically to the example shown in FIG. 5C, it is understood that the center, i.e., the optimum receiving position CE of the light receiving intensity distribution is around the shift quantity SF=0.

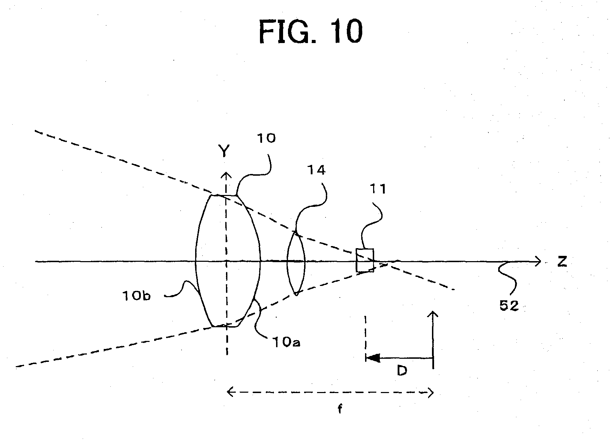

FIG. 10 shows an application example of the optical system of the receiving apparatus according to the present invention. As shown in FIG. 10, a second condensing lens 14 may be provided between the condensing lens 10 of the present invention and the light-receiving element 11. The second condensing lens 14 may be a spherical surface lens. The second condensing lens 14 can improve the light receiving quantity of the incident light received by the condensing lens 10, and can enlarge the range of the light receiving angle.

[Example of Receiving Apparatus]

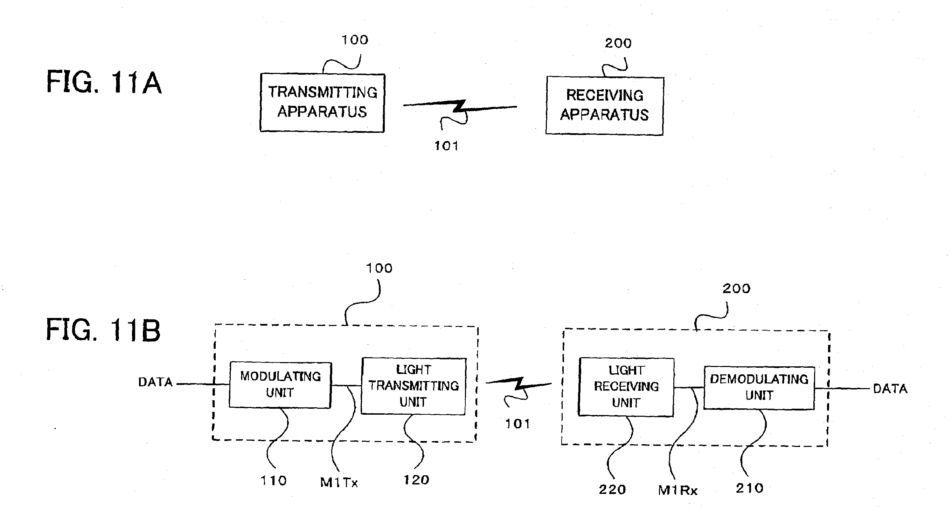

Next, an application example of the above-mentioned receiving apparatus will be explained. FIG. 11A shows a basic configuration of an optical communication system to which the receiving apparatus of the present invention is applied. A light-modulated wave 101 is transmitted from a transmitting apparatus 100, and is received by a receiving apparatus 200.

FIG. 11B shows configurations of the transmitting apparatus 100 and the receiving apparatus 200. As shown in FIG. 11B, the transmitting apparatus 100 includes a modulating unit 110 and a light transmitting unit 120. Data to be transmitted is inputted to the modulating unit 110 and is modulated to generate a modulated wave M1Tx, which is supplied to the light transmitting unit 120. The light transmitting unit 120 converts the modulated wave M1Tx into a light signal, and transmits the signal as the light-modulated wave 101.

The receiving apparatus 200 includes a light receiving unit 220 and a demodulating unit 210. The light receiving unit 220 receives the light-modulated wave 101, converts it into an electric signal to generate a modulated wave M1Rx, and supplies it to the demodulating unit 210. The demodulating unit 210 executes a demodulating process according to a modulating system of the modulating unit 110 in the transmitting apparatus 100, and restores the data.

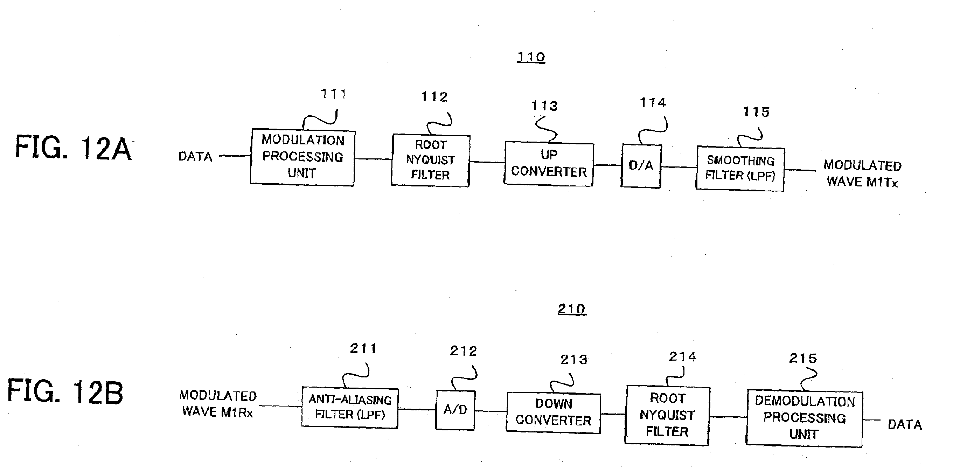

FIG. 12A shows a configuration of the modulating unit 110. The modulating unit 110 includes a modulation processing unit 111, a root nyquist filter 112, an up converter 113, a D/A converter 114 and a smoothing filter 115. The data is processed by a predetermined modulation by the modulation processing unit 111, and a frequency band limitation is executed on the data by the root nyquist filter 112. Afterward, the data is up-converted to a carrier frequency by the up converter 113. The signal after being converted to the carrier frequency is converted to an analog signal by the D/A converter 114, and a folding component due to the D/A conversion is eliminated by the smoothing filter 115, which is a lowpass filter. In that way, the modulated wave M1Tx is generated.

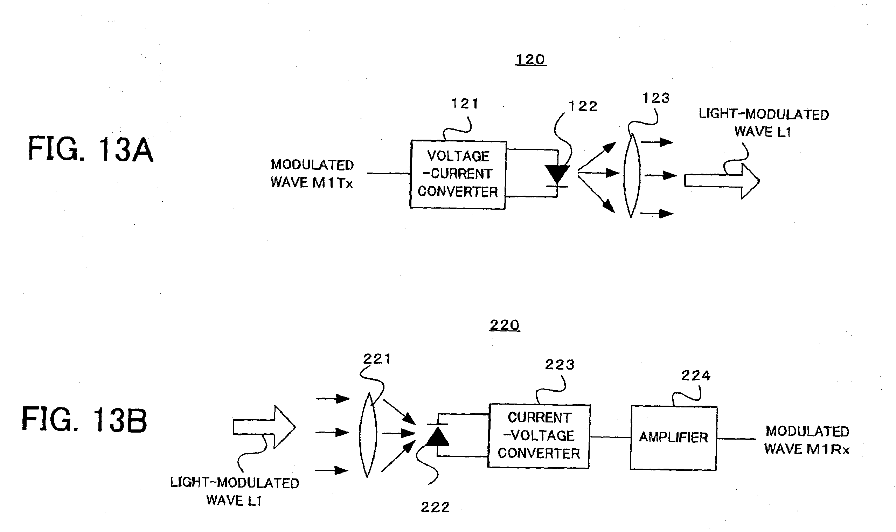

FIG. 13A shows a configuration of the light transmitting unit 120. The light transmitting unit 120 includes a voltage-current converter 121, an optical device 122 and a lens 123. It is noted that a laser diode, an SLD (Super Luminescent Diode) which is an intermediate device of an LED and a laser, and an LED can be utilized as the optical device 122. The voltage-current converter 121 converts the voltage of the modulated wave M1Tx to the current, and generates the current to be supplied to the optical device 122. The optical device 122 is driven by the generated current to emit a light-modulated wave L1. The light-modulated wave L1 is collected by the lens 123 and is transmitted.

FIG. 13B shows a configuration of the light receiving unit 220. The light receiving unit 220 includes a lens 221, an optical device 222, a current-voltage converter 223, and an amplifier 224. The lens 221 collects the light-modulated wave L1 and transmits it to the optical device 222. The optical device 222 outputs the current according to a received light quantity, and the current-voltage converter 223 converts the current into the voltage to supply it to the amplifier 224. The amplifier 224 amplifies the inputted signal at a predetermined rate and outputs the modulated wave M1Rx. The condensing lens 10 of the present invention can be utilized as the lens 221. In addition, the optical device 222 corresponds to the above-mentioned light-receiving element 11. As the light-receiving element, a PIN photodiode, an avalanche photodiode and the like can be utilized.

FIG. 12B shows a configuration of the demodulating unit 210. The demodulating unit 210 includes an anti-aliasing filter 211, an A/D converter 212, a down converter 213, a root nyquist filter 214 and a demodulation processing unit 215. The modulated wave M1Rx is inputted to the anti-aliasing filter 211 and its frequency-band is limited. Afterward, the modulated wave M1Rx is converted to a digital signal by the A/D converter 212. Since the digital signal is at the carrier frequency, the signal is frequency-converted to a base band by the down converter 213. Then, the signal is frequency-band-limited to the use frequency band by the root nyquist filter 214, and the original data is restored by the demodulation processing unit 215.

As described above, data communication is executed from the transmitting apparatus 100 to the receiving apparatus 200 by utilizing the optical device.

**Claims**

1. A light signal receiving apparatus which collects a light signal on a light-receiving element (11) by a condensing lens (10) to receive the signal,

   wherein the light-receiving element (11) is disposed nearer the condensing lens (10) in relation to a focusing point of the condensing lens; and

   wherein the condensing lens (10) comprises a non-spherical surface shape which strongly distributes, on the light-receiving element, an intensity distribution on a light-receiving element disposed plane of an incident light which is obliquely incident with respect to an optical axis (52) of the condensing lens within a range of predetermined angles.

2. The light signal receiving apparatus according to claim 1, wherein the condensing lens (10) has a non-spherical surface (19a, 19b) which is defined by positioning two curves (30, 35), which are obtained by even-number order correction of arcs, such that vertexes (30a, 35a) of the two curves coincide with each other and the two curves cross each other, and by moving one of the two curves in parallel along the other of the two curves.

3. The light signal receiving apparatus according to claim 2, wherein the two curves (30, 35) are defined by equations (1) and (2) below respectively, when it is prescribed that a radial direction of the condensing lens (10) is an X axis direction, another radial direction vertical to the radial direction is a Y axis direction, and an optical axis (52) direction of the condensing lens is a Z axis direction:

$$Z = \frac{C\,Y^2}{1+\{1-(k+1)C^2Y^2\}^{1/2}} \qquad (1)$$

   \* C:CURVATURE
   k: SHAPE FACTOR

$$Z = \frac{C\,X^2}{1+\{1-(k+1)C^2X^2\}^{1/2}} \qquad (2)$$

   \* C: CURVATURE
   k: SHAPE FACTOR

4. The light signal receiving apparatus according to claim 1, further comprising another condensing lens

**EP 1 508 820 A1**

(14) which is disposed between the condensing lens (10) and the light-receiving element (11), and which enlarges a light receiving angle range of the light signal by the light-receiving element.

FIG. 1A

FIG. 1B

**FIG. 2A**

LIGHT RECEIVING
INTENSITY [dB]

55          56

X
+

o                    o

HORIZONTAL
DIRECTION
ANGLE [° ]

VERTICAL
DIRECTION
ANGLE [° ]

Y
+

−        −

**FIG. 2B**

LIGHT RECEIVING
INTENSITY [dB]

55          56

X
+

o                    o

HORIZONTAL
DIRECTION
ANGLE [° ]

VERTICAL
DIRECTION
ANGLE [° ]

Y
+

−        −

FIG. 3A

FIG. 3B

**FIG. 4A**

LIGHT RECEIVING
INTENSITY

CE

INCIDENT LIGHT ANGLE $\alpha = 0°$

300

200

100

0

-40    -20    0    20    40    [mm]

SHIFT QUANTITY SF
FROM OPTICAL AXIS

**FIG. 4B**

LIGHT RECEIVING
INTENSITY

CE

INCIDENT LIGHT ANGLE $\alpha = 10°$

300

200

100

0

-40    -20    0    20    40    [mm]

SHIFT QUANTITY SF
FROM OPTICAL AXIS

**FIG. 4C**

LIGHT RECEIVING
INTENSITY

CE

INCIDENT LIGHT ANGLE $\alpha = 20°$

400

200

0

-40    -20    0    20    40    [mm]

SHIFT QUANTITY SF
FROM OPTICAL AXIS

13

FIG. 5A

LIGHT RECEIVING INTENSITY

CE

INCIDENT LIGHT ANGLE α = 0°

100

50

0

-40        -20         0        20        40    [mm]

SHIFT QUANTITY SF
FROM OPTICAL AXIS

FIG. 5B

LIGHT RECEIVING INTENSITY

CE

INCIDENT LIGHT ANGLE α = 10°

180

100

0

-40        -20         0        20        40    [mm]

SHIFT QUANTITY SF
FROM OPTICAL AXIS

FIG. 5C

LIGHT RECEIVING INTENSITY

CE

INCIDENT LIGHT ANGLE α = 20°

250

100

0

-40        -20         0        20        40    [mm]

SHIFT QUANTITY SF
FROM OPTICAL AXIS

FIG. 6A

LIGHT RECEIVING
INTENSITY [dB]

X

70

HORIZONTAL
DIRECTION
ANGLE [° ]

Y

VERTICAL
DIRECTION
ANGLE [° ]

FIG. 6B

X

HORIZONTAL
DIRECTION
ANGLE [° ]

70

Y

VERTICAL
DIRECTION
ANGLE [° ]

FIG. 7A

FIG. 7B

FIG. 7C

FIG. 7D

FIG. 7E

# FIG. 8

Y [mm]

LENS WIDTH 70

10

11

LIGHT RECEIVING POSITION [mm]

# FIG. 9

LIGHT RECEIVING INTENSITY

CE

INCIDENT LIGHT ANGLE $\alpha = 20°$

[mm]

SHIFT QUANTITY SF FROM OPTICAL AXIS

17

# FIG. 10

FIG. 11A

100

TRANSMITTING
APPARATUS

101

200

RECEIVING
APPARATUS

FIG. 11B

100

DATA ─── MODULATING UNIT ─── LIGHT TRANSMITTING UNIT

110   M1Tx   120

101

200

LIGHT RECEIVING UNIT ─── DEMODULATING UNIT ─── DATA

220   M1Rx   210

EP 1 508 820 A1

19

FIG. 12A

110

DATA — 111 MODULATION PROCESSING UNIT — 112 ROOT NYQUIST FILTER — 113 UP CONVERTER — 114 D/A — 115 SMOOTHING FILTER (LPF) — MODULATED WAVE M1Tx

FIG. 12B

210

MODULATED WAVE M1Rx — 211 ANTI-ALIASING FILTER (LPF) — 212 A/D — 213 DOWN CONVERTER — 214 ROOT NYQUIST FILTER — 215 DEMODULATION PROCESSING UNIT — DATA

EP 1 508 820 A1

**FIG. 13A**

<u>120</u>

121

122

123

LIGHT-MODULATED
WAVE L1

MODULATED
WAVE M1Tx

VOLTAGE
-CURRENT
CONVERTER

**FIG. 13B**

<u>220</u>

221

223

224

CURRENT
-VOLTAGE
CONVERTER

AMPLIFIER

MODULATED
WAVE M1Rx

LIGHT-MODULATED
WAVE L1

222

EP 1 508 820 A1

<table>
<tr><td colspan="2"><strong>European Patent Office</strong></td><td><strong>EUROPEAN SEARCH REPORT</strong></td><td><strong>Application Number</strong><br>EP 04 25 4999</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 042 821 A (MIERZWINSKI EUGENE P) 16 August 1977 (1977-08-16) * the whole document * | 1 | G02B3/02 |
| X | DE 44 07 911 A (TELEFUNKEN MICROELECTRON) 14 September 1995 (1995-09-14) * abstract; figure 3 * * column 2, lines 34-38 * | 1 | |
| X | DE 12 95 232 B (PRONTOR WERK GAUTHIER GMBH) 14 May 1969 (1969-05-14) * abstract; figures * * column 1 * | 1 | |
| A | US 5 036 188 A (KEITOKU NOBORU) 30 July 1991 (1991-07-30) * the whole document * | 1-4 | |
| A | US 2 530 397 A (BEIGEL ANCILLARY HENRY L) 21 November 1950 (1950-11-21) * the whole document * | 2-4 | TECHNICAL FIELDS SEARCHED (Int.Cl.7) |
| A | DE 27 33 937 A (SIEMENS AG) 8 February 1979 (1979-02-08) * the whole document * | 1 | G08C G02B H03J H04N |
| A | US 3 368 078 A (BRUCE HORSFALL ROBERT ET AL) 6 February 1968 (1968-02-06) * abstract; claim 4; figure 3 * | 4 | |

The present search report has been drawn up for all claims

| Place of search | Date of completion of the search | Examiner |
|---|---|---|
| The Hague | 27 October 2004 | Faderl, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 04 25 4999

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2004

| Patent document cited in search report | | Publication date | Patent family member(s) | | Publication date |
|---|---|---|---|---|---|
| US 4042821 | A | 16-08-1977 | AU | 508144 B2 | 13-03-1980 |
| | | | AU | 1906576 A | 04-05-1978 |
| | | | CA | 1072381 A1 | 26-02-1980 |
| | | | CA | 1092400 A2 | 30-12-1980 |
| | | | DE | 2648603 A1 | 12-05-1977 |
| | | | FR | 2330020 A1 | 27-05-1977 |
| | | | GB | 1555245 A | 07-11-1979 |
| | | | IT | 1071540 B | 10-04-1985 |
| | | | JP | 1106151 C | 30-07-1982 |
| | | | JP | 52055322 A | 06-05-1977 |
| | | | JP | 56051546 B | 05-12-1981 |
| DE 4407911 | A | 14-09-1995 | DE | 4407911 A1 | 14-09-1995 |
| | | | EP | 0671613 A1 | 13-09-1995 |
| DE 1295232 | B | 14-05-1969 | NONE | | |
| US 5036188 | A | 30-07-1991 | JP | 3025121 U | 14-03-1991 |
| US 2530397 | A | 21-11-1950 | NONE | | |
| DE 2733937 | A | 08-02-1979 | DE | 2733937 A1 | 08-02-1979 |
| US 3368078 | A | 06-02-1968 | NONE | | |

For more details about this annex : see Official Journal of the European Patent Office, No. 12/82